# EUROPEAN PATENT APPLICATION

(11) **EP 4 068 573 A1**
(43) Date of publication of application: **05.10.2022**
(21) Application number: 22163891.9
(22) Date of filing: 23.03.2022
(51) Int. Cl.: H02K 1/14, H02K 1/2781, H02K 29/03

(54) **A COGGING ELECTRIC MACHINE AND A METHOD OF OPERATING THE COGGING ELECTRIC MACHINE**

(30) Priority: 25.03.2021 PL 43741221
(71) Applicant: Akademia Gorniczo-Hutnicza im. Stanislawa Staszica w Krakowie, 30-059 Krakow (PL)
(72) Inventor: Skwarczy ski, Jerzy, 31-121 Kraków (PL); Drabek, Tomasz, 30-348 Kraków (PL); Lerch, Tomasz, 30-348 Kraków (PL)
(74) Representative: Wroblewski, Marcin Jan

(57) **Abstract**

The object of the invention is a cogging electric machine and a method of operating the cogging electric machine. The machine is characterised in that the armature (1) comprises at least two constructionally identical segments (1A), (1B), each of which has tooth coils (2), shifted relative to the tooth coils of the other segment by a vector with the same direction as the direction of movement of the moving element of the machine, and a length resulting from the number of teeth (8). The number of teeth in each segment (1A), (1B) of the armature (1) is an even number equal to the number of magnets (5) of a single segment, while the winding of each segment forms a single phase intended for providing power with alternating current with a zero average value. The object of the invention constitutes a machine with rotary motion, in which the multi-segment armature (1) has the form of a stator, while the exciter comprises the magnets of rotor segments (4), the current of the armature (1) of each consecutive segment (1B) after the first one being phase-shifted relative to the current of the first segment by a value dependent on the length of the shifting vector of the coils (2), the spacing between the teeth (8) and the number of pairs of magnets (5) of a single rotor segment. It is also possible that the moving part constituting the rotor (4) is external relative to the immovable internal armature.

The method of operating the electric machine is characterised in that, due to the phase shift of alternating currents flowing in the windings of the segments (1A), (1B), (1C) and the mechanical circumferential shift of the coils (2) in the windings of these segments, the aggregate variable component of the torques generated in the individual segments (1A), (1B), (1C) becomes reduced to a value resulting from the presence of harmonics of an order higher than the number of pole pairs in the gap field, while at the same time the constant components of the torques of the individual segments sum up.

## Description

### Technical field

The object of the invention is a cogging electric machine, i.e. an electric machine which for its functioning uses electromagnetic torques, acting between the teeth of a ferromagnetic armature with tooth coils and the permanent magnets of an exciter in a number equal to the number of teeth of a single segment of the armature. The object of the invention is also a method of operating this machine.

### Description of prior art

Electric machines with permanent magnets are commonly known and used constructions. They exist as rotating field electric machines, and thus synchronous machines (*Permanent Magnet Synchronous Machine*/*Motor* - PMSM, *Internal Permanent Magnet Synchronous Machine*/*Motor -* IPMSM, *Surface Mounted Permanent Magnet Synchronous Machine*/*Motor-* SMPMSM, e.g. [Zalas P., Antal L., LOW POWER PERMANENT MAGNET SYNCHRONOUS MOTOR DESIGNED TO SYNCHRONOUS STARTING, Zeszyty Problemowe - Maszyny Elektryczne, No. 3/2012 (96), ed. INiME "Komel", Katowice, 2012]), or as electrically switchable machines with various operating principles (brushless direct current motor *DC brushless* [Krykowski K., PM BLDC motors - properties, control, applications, ed. BTC, Legionowo, 2015], a hybrid stepper motor [Wróbel T.: Stepper motors, ed. WNT, Warsaw, 1993], switched flux machines/motors - SFM, e.g. HEFSM motors - patent [HOANG E., LECRIVAIN M., GABSI M., Machine électrique a commutation deflux et a double excitation. Brevet n° de dépôt FR0602058, déposant: CNRS, 8 mars 2006. March 8, 2007. International patent.], transverse flux machines (TFM). In all these motors, the electromagnetic torque is the sum of three component torques, depending on the position of the rotor: the excitation torque, the reluctance torque and the cogging torque [Gajewski M., Torque ripple analysis in brushless motors with permanent magnets, Doctoral dissertation, Warsaw University of Technology, 2006]. The first two are used to create operating torque in the abovementioned machines. The cogging torque is a parasitic torque, occurring in all electric machines with permanent magnets and a ferromagnetic core. It is a magnetic torque generated due to the magnetic attraction of exciter magnets and ferromagnetic teeth of the armature [Gajewski, op. cit. and Goryca Z., Low speed disk generator for small wind power station, XVI Conference "Issues of Operating Machines and Electrical Propulsions", Rytro 2008, as well as tukaniszyn M., Mtot A., Analysis of electromagnetic torque and ripple components in a brushless direct current motor excited by permanent magnets, Przeglad Elektrotechniczny 10/2005]. More generally, it can be concluded that the cogging torque occurs due to the cooperation of a magnetic field created by permanent magnets with the magnetic circuit of an armature characterised by varying magnetic conductivity for the magnetic flux of an exciter [Ziólek M., Analysis of the operation of a brushless motor with cylindrical windings and an external rotor, Doctoral dissertation, Warsaw University of Technology, 2013]. The existence of armature teeth is objectively difficult to constructionally eliminate, since it results from the necessity to place the winding in the machine in such a way that its volume would not increase the volume of machine parts with low magnetic permeability. This is achieved by placing the windings in grooves between ferromagnetic teeth of high magnetic permeability, by which the magnetic flux of the machine closes.

Minimisation of the cogging torque as a parasitic torque is performed by proper selection of the dimensions of the individual elements of the magnetic circuit in a machine [Lukaniszyn op. cit. and Goryca Z., Ziólek M., Malinowski M., COGGING TORQUE OF THE MULTIPOLAR GENERATOR WITH PERMANENT MAGNETS, Zeszyty Problemowe - Maszyny Elektryczne, No. 88/2010, ed. BOBRME "Komel", Katowice, 2010]. The simplest and the most commonly used method for minimising the cogging torque is to form skewed grooves of the stator, i.e. in the most popular machines with rotary motion and radial magnetisation, grooves nonparallel to the machine shaft [Gajewski op. cit., Goryca 2008 op. cit. as well as Bernatt J., Electrical and magnetic circuits of electrical machines excited with permanent magnets, monograph of BOBRME "Komel", Katowice, 2010]. A second method for minimising the cogging torque next to the one mentioned above is the use of magnet skews instead of skewed grooves [Lukaniszyn op. cit. and Ziólek op. cit.]. Another method for minimising the cogging torque in machines with rotary motion and radial magnetisation is proper selection of the angular span of exciter magnets of the machine relative to the groove (tooth) pitch of its armature. A method for minimising the cogging torque is also to properly select the number of armature teeth relative to the number of exciter magnets [Lukaniszyn op. cit., Goryca 2010 op. cit. as well as Goryca 2013 op. cit.], e.g. by placing the armature winding in an odd number of grooves, differing by 1 or by 3 from the even number of poles (also magnets) of the machine [Goryca 2008 op. cit. and Lukaniszyn op. cit.].

### Summary of the invention

The machine described in the application does not use any of the known methods for reducing the cogging torque: on the straight teeth of the armature segment there are disposed coils comprising individual teeth, the number of which precisely equals the number of magnets of the rotor segment lacking the skew, and the pole pitch of the magnets equals the groove pitch of the armature segment. Under these conditions, the generated cogging torque is considerable, and within a certain range of rotor positions it supports the working excitation torque in a quantitatively significant manner. This is why the machine has been called a cogging one, considering the response of the rotor to the electromagnetic torque generated in each segment separately.

The essence of the cogging electric machine comprising an armature having a winding made of coils wound around the individual teeth of a ferromagnetic core and an exciter provided with magnets is that the armature comprises at least two constructionally identical segments, each of which having tooth coils, shifted relative to the tooth coils of the other segment by a vector with the same direction as the direction of movement of the moving element of the machine, and a length resulting from the number of teeth, the number of teeth in each segment of the armature being an even number equal to the number of magnets of a single rotor segment.

The winding of each segment forms a single phase intended to provide power via an alternating current with a zero average value, the current of each consecutive segment after the first one being phase-shifted relative to the current of the first segment by a value dependent on the length of the shifting vector of the coils, the spacing between the teeth and the number of pairs of magnets of a single rotor segment.

The essence of the method of operating the cogging electric machine is that, due to the phase shift of currents flowing in the windings of the segments and the mechanical circumferential shift of the coils in the windings of these segments, the aggregate variable component of the torques generated in the individual segments becomes reduced to a value resulting from the presence of harmonics of an order higher than the number of pole pairs in the gap field, while the constant components of the torques of the individual segments sum up.

The cogging electric machine can constitute a machine with rotary motion, in which the armature is placed on the stator, while the exciter comprises the rotor magnets, a reverse construction also being possible, i.e. the moving part (rotor) with the magnets is external relative to the immovable armature.

The main advantage of the submitted solution is the better ratio of power to the mass of the machine compared to known constructions of machines with permanent magnets. The use of the proposed solution will allow for the construction of an electric machine with a given power, using to this end a smaller number of materials for constructing electrical and magnetic circuits.

### Brief description of drawings

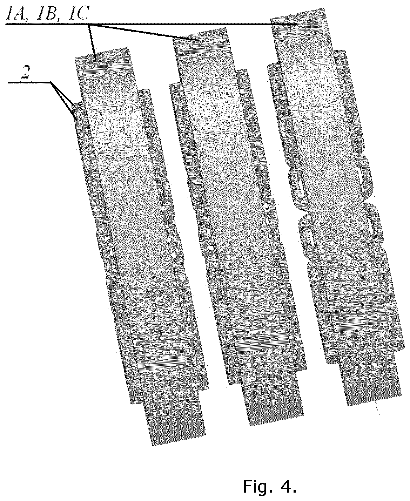

An embodiment is presented in the drawing, in which Fig. 1 presents a complex three-segment, three-phase electric cogging motor in a front view, Fig. 2 presents the same motor in a side view, Fig. 3 presents a ferromagnetic wound stator of the three-segment, three-phase electric cogging motor in a front view, Fig. 4 presents the same stator in a side view, Fig. 5 presents a ferromagnetic rotor with permanent magnets mounted with alternating magnetic poles (N-S-N-S...), while Fig. 6 presents a ferromagnetic rotor segment with permanent magnets mounted with alternating magnetic poles (N-S-N-S...).

### Detailed description of the invention

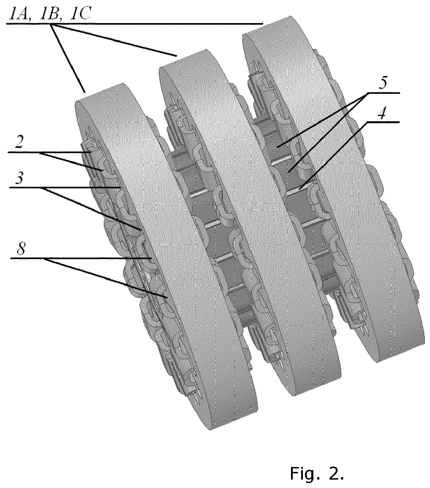

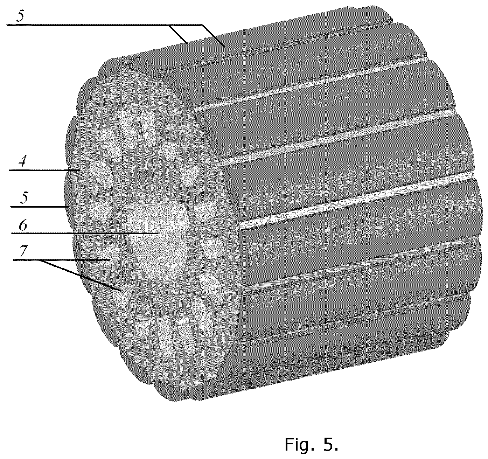

An exemplary embodiment of the cogging machine is its embodiment as a three-segment 1A, 1B, 1C three-phase motor with rotary motion and radial magnetisation, intended for providing power by a three-phase, symmetrical arrangement of sinusoidal currents. Each segment of the motor comprises a stator 1 and rotor part 4, wherein there can be a single cylindrical rotor with surface magnets 5, providing radial magnetisation of the motor, shared by all three segments of the stator (fig. 2, 5).

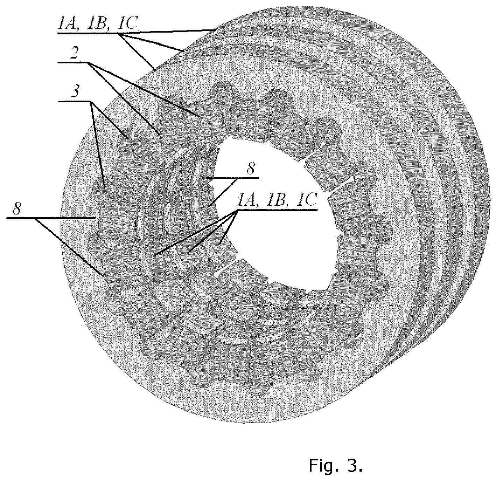

Three identical circular stator segments 1A, 1B, 1C are disposed linearly one behind the other, at distances from each other which enable physically fitting the face connections of the winding 2 of each of the segments between them, and rotated relative to each other by an angle of 120 electrical degrees (fig. 3). Each stator segment is made of mutually insulated ferromagnetic motor metal sheets 1 with an even number of grooves 3 and teeth 8 therebetween, placed on the air gap side between the stator 1 and the rotor 4. Winding 2 of one of the three phases of the armature is disposed in the grooves, made in the form of coils wound onto individual teeth, i.e. coils with a pitch *y*=1. The coils 2 are made of a copper magnet wire in insulation (e.g. in enamel) and preferably placed on carcasses put on the teeth of the stator 8. All coils of a given phase, i.e. a given stator segment: 1A or 1B or 1C, are connected to each other in series. Metal sheets with patterns of the stators of rotating field machines (e.g. exciter motors), and thus typical motor metal sheets with an even number of grooves 3 and also teeth 8 between them, can be used as metal sheets of the stator segments 1.

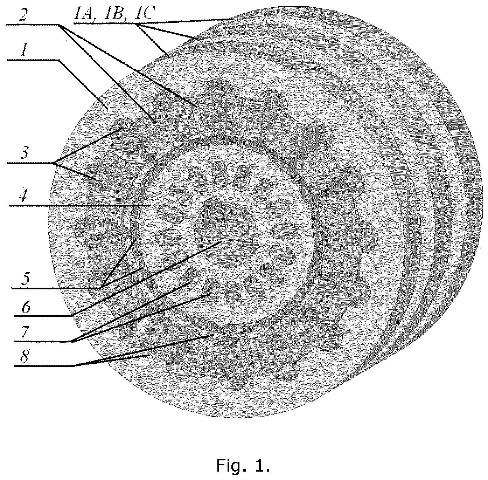

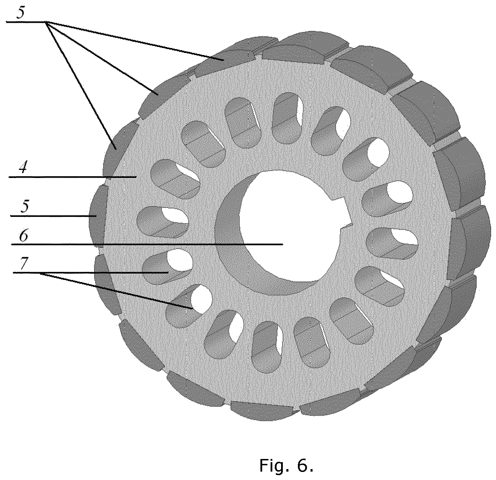

The cylindrical rotor (fig. 5) with an opening for the drive shaft 6 is also made of a ferromagnet 4 (in the meaning of a magnetic circuit), comprising mutually insulated ferromagnetic metal sheets or solid, with magnets 5 disposed on the sidewall of the rotor cylinder (e.g. by the known magnet gluing technique), parallel to its axis, with alternating magnetic poles (N-S-N-S-...), indicated in figs. 1, 2, 5, 6. The cross-section of each magnet is limited by two arches: with a radius of the rotor cylinder (on the rotor side, where the magnet is mounted) and with a radius increased by the adopted thickness of the magnet (on the air gap side between the magnets and the stator segments). In this way, the magnets have an arched shape. The number of magnets 5 (being the motor exciter poles) equals the number of teeth 8 in the stator 1, and it is an even number. The rotor 4 does not have to be segmented, i.e. it can be made as a single ferromagnetic cylinder with magnets (fig. 5), with a length equal to the sum of lengths of all three segments and two distances therebetween. The openings 7 in the rotor 4, visible in figs. 1, 5, 6, parallel to the machine axis, are optional and insignificant for proper functioning of the machine.

The rotor 4 and stator segments 1 are mounted concentrically, with a constant air gap (regardless of the position of the rotor) between the magnets and the stator segments, with a size typically not exceeding several mm. The rotor 4 can rotate inside the concentric openings of the stator segments 1 due to the bearing of the shaft 6.

### List of references

- 1.: stator part divided into stator segments 1A, 1 B, 1C
- 2.: face connections of the winding
- 3.: stator grooves
- 4.: rotor part
- 5.: surface magnets
- 6.: drive shaft
- 7.: openings in the rotor
- 8.: teeth disposed between stator grooves

## Claims

1. A cogging electric machine comprising an armature having a winding made of coils wound around the individual teeth of a ferromagnetic core and an exciter provided with magnets, **characterised in that** the armature (1) comprises at least two constructionally identical segments (1A), (1B), each of which having tooth coils (2), shifted relative to the tooth coils of the other segment by a vector with the same direction as the direction of movement of the moving element of the machine, and a length resulting from the number of teeth (8), the number of teeth in each segment (1A), (1B) of the armature (1) being an even number equal to the number of magnets (5) of a single segment, while the winding of each segment forms a single phase intended for providing power with alternating current with a zero average value.

2. The cogging electric machine according to claim 1, **characterised in that** it constitutes a machine with rotary motion, in which the multi-segment armature (1) has the form of a stator, while the exciter comprises the magnets of the rotor segments (4), the current of the armature (1) of each consecutive segment (1B) after the first one being phase-shifted relative to the current of the first segment by a value dependent on the length of the shifting vector of the coils (2), the spacing between the teeth (8) and the number of pairs of magnets (5) of a single rotor segment.

3. The cogging electric machine according to claim 2, **characterised in that** the moving part constituting the rotor (4) is external relative to the immovable internal armature.

4. A method of operating the cogging electric machine **characterised in that**, due to the phase shift of alternating currents flowing in the windings of the segments (1A), (1B), (1C) and the mechanical circumferential shift of the coils (2) in the windings of these segments, the aggregate variable component of the torques generated in the individual segments (1A), (1B), (1C) becomes reduced to a value resulting from the presence of harmonics of an order higher than the number of pole pairs in the gap field, while at the same time the constant components of the torques of the individual segments sum up.
